# EUROPEAN PATENT APPLICATION

(11) **EP 1 152 579 A2**
(43) Date of publication of application: **07.11.2001**
(21) Application number: 00850186.8
(22) Date of filing: 03.11.2000
(51) Int. Cl.: H04L 29/06

(54) **Method and system for communication with a WWW Server**

(30) Priority: 05.05.2000 SE 0001680
(71) Applicant: Ewing, James, 13463 Ingarö (SE)
(72) Inventor: Ewing, James, 13463 Ingarö (SE)
(74) Representative: Estreen, Lars

(57) **Abstract**

In a WWW server a multi-protocol engine is provided. The engine can be installed within a pre-existing WWW server program. The multi-protocol engine receives requests in the network layer protocol layer, translates the binary session layer protocols to the HTTP ASCII session layer protocol, translates and accommodates any incompatibilities between the WWW server programs original HTTP session layer protocol, and additionally translates any binary data formats and to formats compatible with the WWW server programs original design. By using such a multi-protocol engine directly into the pre-existing web server program the delay problem in existing systems is substantially solved. Additionally, installation of the multi-protocol motor within a pre-existing WWW server solves the problems associated with duplicated infrastructure and personnel, weakened security, and additional training requirements.

## Description

### TECHNICAL FIELD

The present invention relates to a method and a system for enabling Wireless Application Protocol (WAP) and other Internet protocol communication transactions on a World Wide Web (WWW) server. In particular the invention relates to enabling an existing WWW server to communicate with client machines in protocols other than the Hypertext Transfer Protocol (HTTP) that WWW servers are designed to use.

### BACKGROUND OF THE INVENTION AND PRIOR ART

The World Wide Web is based on a layered system of communications protocols. These communications protocol layers can be divided into the network layer, the session layer, and the security layer protocols.

The network layer protocol is comprised of the Internet Protocol (IP) routing protocol together with the Transmission Control Protocol (TCP/IP) and User Datagram Protocol (UDP). These protocols are collectively referred by the acronym TCP/IP.

The IP protocol is used to route information through the Internet between two network peers. Each peer is assigned a unique numeric IP address. Open connection endpoints between two peer IP addresses are referred to as sockets. A socket is a unique number from 1 to 65535.

TCP is a connected protocol that creates a virtual circuit between two network peers. Data is transmitted from one unique source IP address and socket pair to a unique destination IP address and socket pair. Data is converted into packet form, routed from the source to destination, reassembled and passed to a higher layer protocol. Lost or corrupted data is retransmitted, thus creating a virtual circuit.

UDP is a stateless protocol supplying "best effort" data transmission. Like TCP, data is transmitted between two IP address and socket pairs. Data is converted to packet form and routed to its destination. However, no virtual circuit is created. The peer does not retransmit lost or corrupted UDP packets. Only a checksum is provided for discarding corrupted packets.

The WWW server service is generally assigned to TCP/IP socket 80. The WWW client can choose any free socket.

WWW servers are designed to communicate with WWW clients (also know as "web browsers") using the TCP/IP network layer protocol. In addition to the network layer, WWW servers and clients use a higher-level session protocol known as HTTP. HTTP is a text-based protocol that facilitates the exchange of information between the WWW client and the WWW server. The information that is exchanged is principally in the Hypertext Markup Language (HTML), although other markup languages can be used. The combination of the HTTP session communications protocol and the HTML markup language information transmitted via the TCP/IP network layer are what principally comprise the system known as the World Wide Web.

The Secure Session Layer (SSL) protocol was developed to provide security to WWW clients and servers. SSL provides a mechanism whereby WWW servers and clients can authenticate each other, authenticate the data exchanged, securely exchange encryption keys, and securely encrypt the data exchanged between them. The SSL protocol is designed to use the TCP network layer protocol and is generally assigned socket 443 on the WWW server. The client is able to use any free socket it chooses.

The World Wide Web standard is changing rapidly to adapt to changing conditions and needs. Currently the HTTP session protocol has been revised to version 1.1, which supersedes versions 1.0 and 0.9. The HTML markup language has been revised to version 4.0, which supersedes versions 1.0, 2.0, and 3.0. With each release of new protocol versions, the existing WWW server programs must be rewritten and reinstalled to accommodate the changes.

The HTTP session protocol is a verbose protocol. It is composed of fields and parameters described using the first 127 characters of the American Standard Code for Information Interchange (ASCII).

In order to optimise the HTTP session protocol for devices with limited bandwidth, processing power, and/or memory, alternative protocols have been developed. Chief among these alternative protocols is the Wireless Access Protocol (WAP). WAP uses a binary WAP Session Protocol (WSP) to encode the ASCII HTTP fields and parameters, saving both memory and bandwidth. Additionally, WAP uses the UDP "best effort" network layer protocol and creates additional higher layer protocols to handle data corruption and retransmission. Thus, WAP is substantially incompatible with HTTP and the WWW standard.

A vendor desiring to use the WAP protocol must install a separate WAP gateway program. This WAP gateway program handles all communication between the WWW server program and the WAP client (i.e. WAP "browser") program. The WAP gateway program translates the binary WAP session protocol to the ASCII HTTP protocol and forwards the request to the WWW server program. The gateway program receives the WWW server program's HTTP reply, translates it to the WSP binary format, and forwards the reply to the client "browser" program.

In addition to the binary translation to and from the WSP session level protocol, the WAP standard also defines several additional binary protocols and data formats that include the WAP Transaction Protocol (WTP), the binary WAP Markup Language (WBXML), the WAP Bitmap Graphics Format (WBMP), the WAP Scripting Language (WMLScript), and the WAP Transaction Layer Security protocol (WTLS), among others.

The WTLS protocol presents particular problems because it is not compatible with the SSL WWW secure session protocol. Because the two protocols are incompatible, encrypted data from a WAP client must be decrypted at the WAP gateway and then re-encrypted in the SSL protocol before being forwarded to the WWW server. This defeats the purpose of a secure session protocol and provides an inherently insecure connection between the WAP client and WWW server.

Thus, today a vendor with an existing WWW server infrastructure is faced with several major problems when deciding to support additional information protocols such as WAP. Foremost is the problem associated with the additional delay imposed by the WAP gateway translation to and from the binary WAP session protocol. In addition, incompatibilities between the WTLS secure session protocol and the SSL secure session protocol create an inherent security problem. Other problems that will be encountered are additional infrastructure and development costs, duplication of equipment and personnel, and retraining requirements.

### SUMMARY

It is an object of the present invention to overcome the problems of supporting additional protocols in a pre-existing WWW server infrastructure.

This object is obtained by means of providing a multi-protocol engine that can be installed into a pre-existing web server program. The use of such a multi-protocol engine solves several problems encountered when using a conventional solution comprising a gateway translation model.

The present invention provides a multi-protocol engine, which can be installed within a pre-existing WWW server program. The multi-protocol engine receives requests from the network layer protocol, translates a binary session layer protocol or binary session layer protocols to the HTTP ASCII session layer protocol, accommodates communications requirements of a binary transaction layer protocol or protocols, accommodates communications requirements of a binary secure session layer protocol or protocols, translates and accommodates any incompatibilities between the WWW server program's original HTTP session layer protocol and the binary session layer protocol, and additionally translates any binary data formats and to formats compatible with the WWW server programs original design.

Thus, a WWW server supplemented with the multi-protocol engine will, when communicating with a client perform the following steps: First it receives a request from the client, which can be in a format, which is incompatible with the design of the WWW server program. If it is decided that the request is in a format being incompatible with the WWW server program, the received request is intercepted. Then any binary data formats of the intercepted request is translated into formats compatible with the WWW server programs original design, and finally the translated request is forwarded to the WWW server program.

By using such a multi-protocol engine directly into the pre-existing web server program the delay problem is substantially solved. Additionally, installation of the multi-protocol motor within a pre-existing WWW server solves the problems associated with duplicated infrastructure and personnel, weakened security, and additional training requirements.

### BRIEF DESCRIPTION OF THE DRAWINGS

The present invention will now be described in more detail and with reference to the accompanying drawings, in which:
Fig. 1 is a general view of a WAP transaction from a WAP client to a WWW Server via a WAP Gateway, and
Fig. 2 is a view of a WAP transaction from a WAP client to a WWW Server using a multi-protocol engine running from within the WWW Server process.
Fig. 3 is a flow chart illustrating different steps carried out in the multi-protocol engine in Fig. 2.

### DESCRIPTION OF PREFERRED EMBODIMENTS

A WAP protocol engine is designed in a computer programming language to handle communication using the WAP communications standard. The WAP protocol engine receives WAP client requests via the UDP network protocol on sockets 9200, 9201, 9202 and 9203, or, alternatively, the TCP/IP ports so designated to process WAP requests. The socket number determines whether the incoming request uses the WSP session protocol, the WTP transaction protocol together with the WSP session protocol, or the WTLS secure session protocol together with one of the aforementioned combinations of WSP or WSP and WTP.

The WAP protocol engine is preferably installed via an Application Program Interface (API) provided with the pre-existing WWW server program. The WAP protocol engine can install itself within the pre-existing WWW server program when the server program is started. The WAP protocol engine optionally creates its own thread of execution or insures that the WWW server program will provide it with processor execution time. The WAP protocol engine is designed to wait for incoming WAP client requests on the aforementioned TCP/IP sockets.

If a request is received on socket 9200, or, alternatively, the port designated to receive WSP session level protocol requests without the WTP transaction level protocol, it is processed using the WSP session level protocol alone. The WSP binary format is translated to the HTTP ASCII format. Additional data manipulation is performed as needed to accommodate differences between the requesting client and the responding server. This may include character set translation, HTTP field and header caching, compression or decompression of the data, or HTTP field header data transformation.

The request can be forwarded to the WWW server via a TCP/IP connection beginning and ending the local machine. This request is forwarded to TCP/IP socket 80, or alternatively, the port designated to receive WWW Server requests by the WWW Server program. As an alternative the request is forwarded via an Application Program Interface (API). The API then transfers the data associated with the request directly to the WWW server program

In addition to translating the WSP session layer protocol, the WAP protocol engine translates any differences in character sets used by the WAP client and the WWW server for POST requests. Upon receiving a reply from the WWW server, the WAP protocol engine translates the HTTP ASCII session layer protocol to the WSP binary session layer protocol, and may additionally translate the character based WML markup language to the binary WBXML language, the character based WMLScript byte-code language to the binary WMLScript format, and any character set differences between the WWW server and the WAP client. Additional information translations or modifications are performed where appropriate.

If a request is received on socket 9201, or, alternatively, the socket designated to receive WSP session requests processed using the WTP transaction level protocol, the request is processed using the WSP session level protocol and additionally the WTP transaction level protocol. When a request is received using both the WTP transaction layer protocol and the WSP session layer protocol, the aforementioned translations and modifications are performed. However, the WAP protocol engine preferably also accommodates any requirements imposed by the WAP WTP protocol.

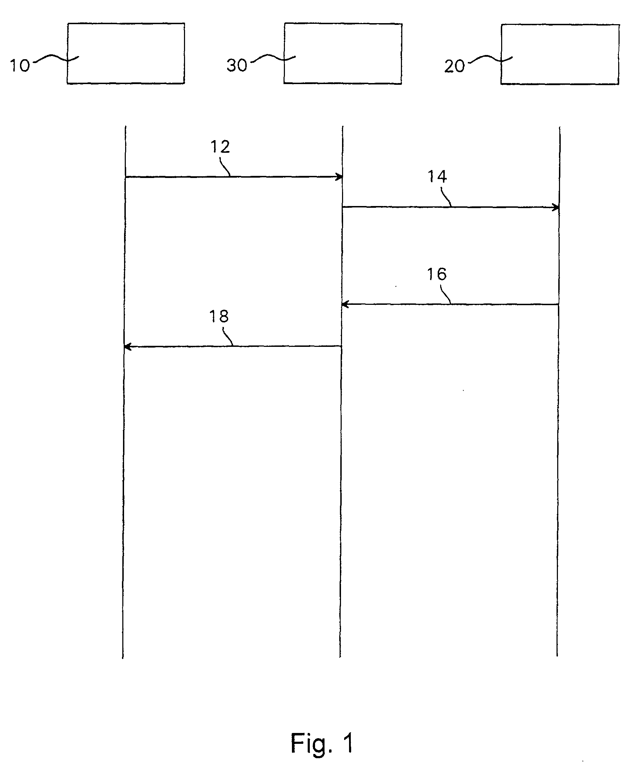

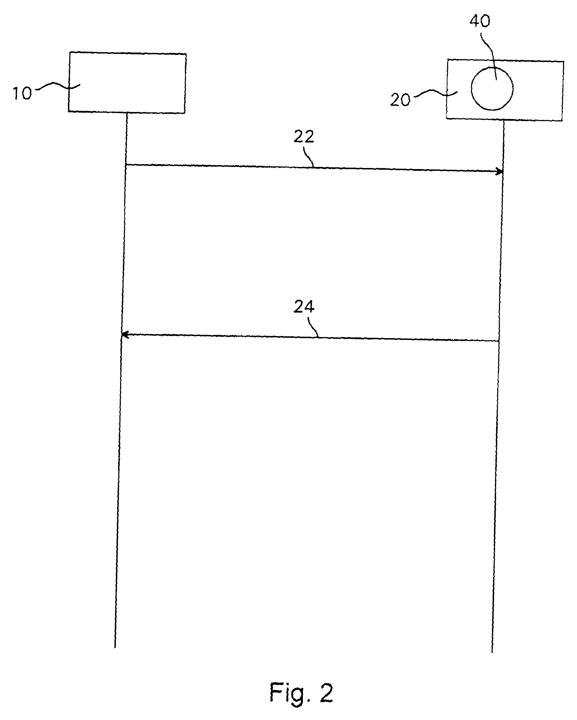

When a request is received by using the WAP WTLS secure session protocol and with the WSP session level protocol on socket 9202, or, alternatively, the socket designated to receive WSP session protocol requests using the WTLS secure session protocol, or WSP and WTP with WTL on socket 9203, or, alternatively, the socket designated to receive WSP session protocol processed using the WTP transaction protocol together with the WTLS secure session protocol, the WAP protocol engine accommodates any handshaking, encryption, compression, signing, or key-exchange required by the WAP client and the WTLS standard. The WAP protocol engine further handles any communications requirements of WSP and/or WTP and the aforementioned data translations. Below, an exemplary transaction carried out in a conventional WAP system is shown in Fig. 1. The same transaction carried out in a system employing the multi-protocol engine as described above is shown in Fig. 2.

Thus, in Fig. 1, a WAP transaction from a WAP client to a WWW Server via a WAP Gateway is shown. First, a WAP request 12 is transmitted from a WAP client 10 towards a WWW server 20. The WAP request from the client 10 will be transmitted using the UDP protocol and is received by a gateway 30. The gateway 30 translates the WAP request into an HTTP request 14, which is transmitted onwards to the WWW server using a TCP/IP protocol.

As a response to the request from the WAP client 10, the WWW server 20 transmits an HTTP response 16 towards the WAP client. The response 16 is received by the gateway 30, which translates the HTTP response 16 into a WAP response 18, which is transmitted back to the client 10 using a UDP protocol.

In Fig. 2, the same transaction as described above in conjunction with Fig. 1 is carried out using a system employing a multi-protocol engine in the WWW server 20. First a WAP request 22 is transmitted from the WAP client 10 towards the WWW server 20. The request 22 is received by the WWW server 20, and the WAP request is translated by a multi-protocol engine 40 as described above in the WWW server 20. The WWW server then transmits a response to the WAP client 10, which is translated into a WAP format by the multi-protocol engine 40.

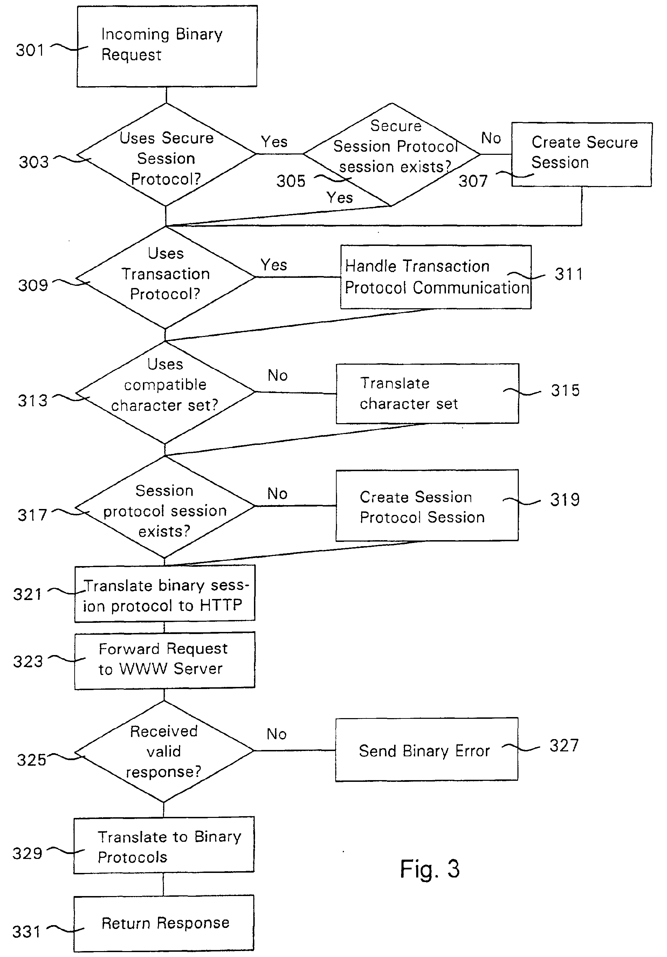

In Fig. 3, the different steps performed in the multi-protocol engine 40 in Fig. 2 are illustrated. Thus, first in a step 301, the engine receives an incoming request from the client 10 in Fig. 2. Next, it checks if the request uses a Secure Session Protocol, step 303. If so, the engine checks if a Secure Session Protocol session exists, step 305. If no Secure Session Protocol session exists a secure session is created, step 307.

Thereupon, in a step 309, the engine checks if the request uses a Transaction Protocol. If so, the engine handles Transaction Protocol communication, step 311. Next, in a step313, the engine checks if the request uses a compatible character set. If not, the engine translates the character set, step 315. Next, in a step 317, the engine checks if a session protocol session exists. If not, a session protocol session is created, step 319.

Thereupon, in a step 321, the engine translates the binary session protocol into the HTTP-protocol. And forwards the request to the WWW server 20 in Fig. 2, step 323. Next, the engine checks if it has received a valid response from the WWW-server, step 325. If not the engine sends a binary error, step 327. If, on the other hand, the response is valid the response is translated into binary protocols in a step 329, and finally the response is returned to the client 10 in a step 331.

Thus, by using a WAP protocol engine that runs within a pre-existing WWW server program's process space, the pre-existing WWW server program is transformed into a program that is capable of accommodating multiple protocols (WAP, WWW) simultaneously. Hence, it is no longer limited to communication via the protocol it was originally designed to use.

## Claims

1. A method in a WWW server communicating with a client comprising the steps of:
- (a) receiving a request from the client in a format being incompatible with the design of the WWW server program,
(b) detecting that the request is in a format being incompatible with the WWW server program,
- (c) intercepting the received request in response to detecting the request has an incompatible format,
- (d) translating any binary data formats of the intercepted request into formats compatible with the WWW server programs original design, and
(e) forwarding the translated request to the WWW server program.

2. A method according to claim 1, wherein the translation of the binary data formats includes translating a binary session layer protocol request from a client into to the HTTP ASCII session layer protocol from within the WWW server program's own process space,

3. A method according to any of claims 1 or 2, wherein the translated request is forwarded to the WWW server program using a TCP/IP network connection originating and ending within the WWW server.

4. A method according to any of claims 1 or 2, wherein the translated request is forwarded to the WWW server program using an application program interface (API).

5. A method according to any of claims 1 - 4, comprising the additional step of:
translating and accommodating incompatibilities between the WWW server programs original HTTP session layer protocol and the translated binary client session protocol.

6. A method according to any of claims 1 - 5, comprising the additional step of:
translating and accommodating communication requirements of a binary transaction layer protocol request from a client from within the WWW server program's own process space.

7. A method according to any of claims 1 - 6, comprising the additional step of:
- translating and accommodating communication requirements of a binary secure session layer protocol request from a client from within the WWW server program's own process space.

8. A method according to any of claims 2 - 7, where the client is a WAP client, wherein the binary data protocol is the binary WAP session layer protocol (WSP).

9. A method according to any of claims 2 - 8, where the client is a WAP client, wherein the binary protocol is the binary WAP transaction layer protocol (WTP) protocol.

10. A method according to any of claims 2 - 9, where the client is a WAP client, wherein the binary protocol is the binary WAP secure session layer protocol (WTLS).

11. A method according to any of claims 1 - 10, wherein a t least one of the translating steps are performed by a communications protocol engine within the WWW server program's own process.

12. A method according to claim 11, wherein the communications protocol engine is installed via an application program interface (API).

13. A computer program designed to be installed in a WWW server, the server communicating with a client, which computer program when executed on a computer performs the steps of:
- detecting if a request is in a format being incompatible with the WWW server program,
- intercepting the received request in response to detecting the request has an incompatible format,
- translating any binary data formats of the intercepted request into formats compatible with the WWW server programs original design, and
- forwarding the translated request to the WWW server program.

14. A computer program according to claim 13, which computer program further performs the step of translating a binary session layer protocol request from a client into to the HTTP ASCII session layer protocol from within the WWW server program's own process space

15. A computer program according to claim 13 or 14, which computer program further performs the step of translating and accommodating communication requirements of a binary secure session layer protocol request from a client from within the WWW server program's own process space.

16. A computer program according to any of claims 13 - 15, which computer program further performs the step of forwarding the translated request to the WWW server program using a TCP/IP network connection originating and ending within the local machine.

17. A computer program according to any of claims 13 - 16, which computer program further performs the step of forwarding the translated request to the WWW server program using an application program interface (API).

18. A computer program according to any of claims 14- 17, where the client is a WAP client, wherein the binary protocol is the binary WAP session layer protocol (WSP).

19. A computer program according to any of claims 14 - 17, where the client is a WAP client, wherein the binary protocols are the binary WAP session layer protocol (WSP) and the binary WAP transaction layer protocol (WTP).

20. A computer program according to any of claims 14 -.17, where the client is a WAP client, wherein the binary protocols are the binary WAP session layer protocol (WSP), the binary WAP transaction layer protocol (WTP), and the binary WAP secure session layer protocol (WTLS).

21. A computer program according to any of claims 13 - 20, wherein the translating steps are performed by a communications protocol engine within the WWW server program's own process installed via an application program interface (API).

22. A WWW server, the server being designed to communicate with a client, comprising:
- means for receiving a request from the client in a format being incompatible with the design of the WWW server program,
- means for detecting that the request is in a format being incompatible with the WWW server program,
- means for intercepting the received request in response to detecting the request has an incompatible format,
- means for translating any binary data formats of the intercepted request into formats compatible with the WWW server programs original design, and
- means for forwarding the translated request to the WWW server program.

23. A server according to claim 22, wherein the translation means for translating the binary data formats includes means for translating a binary session layer protocol request from a client into to the HTTP ASCII session layer protocol from within the WWW server program's own process space,

24. A server according to any of claims 22 or 23, comprising means for forwarding the translated request to the WWW server program using a TCP/IP network connection originating and ending within the WWW server.

25. A server according to any of claims 22 or 23, comprising means for forwarding the translated request to the WWW server program using an application program interface (API).

26. A server according to any of claims 22 - 25, comprising means for translating and accommodating incompatibilities between the WWW server programs original HTTP session layer protocol and the translated binary client session protocol.
